(19) Europäisches Patentamt
European Patent Office
Office européen des brevets

(11) EP 1 637 564 B1

(12) EUROPÄISCHE PATENTSCHRIFT

(45) Veröffentlichungstag und Bekanntmachung des Hinweises auf die Patenterteilung:
**02.01.2008 Patentblatt 2008/01**

(51) Int Cl.:
***C08L 83/04*** *(2006.01)* ***C09D 183/04*** *(2006.01)*
***C08G 77/20*** *(2006.01)*

(21) Anmeldenummer: **05019589.0**

(22) Anmeldetag: **08.09.2005**

(54) **Vernetzbare Zusammensetzungen und Alkenylgruppen aufweisende Organopolysiloxane**

Crosslinkable Compositions and organopolysiloxanes comprising alkenylic groups

Compositions réticulabales et organopolysiloxanes comprenant des groupements alkényles

(84) Benannte Vertragsstaaten:
**BE DE FR GB NL PL**

(30) Priorität: **16.09.2004 DE 102004044943**

(43) Veröffentlichungstag der Anmeldung:
**22.03.2006 Patentblatt 2006/12**

(73) Patentinhaber: **Wacker Chemie AG**
**81737 München (DE)**

(72) Erfinder: **Lautenschlager, Hans, Dr.**
**84533 Haiming (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 1 277 802**

- **PATENT ABSTRACTS OF JAPAN Bd. 2003, Nr. 06, 3. Juni 2003 (2003-06-03) & JP 2003 055552 A (SHIN ETSU CHEM CO LTD), 26. Februar 2003 (2003-02-26)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 637 564 B1

## Beschreibung

Die Erfindung betrifft vernetzbare Zusammensetzungen enthaltend Alkenylgruppen aufweisende Organopolysiloxane. Weiterhin betrifft die Erfindung Formkörper, insbesondere klebrige Stoffe abweisende Überzüge. Weiterhin betrifft die Erfindung ein Verfahren zur Herstellung von Beschichtungen, insbesondere klebrige Stoffe abweisende Überzüge. Weiterhin betrifft die Erfindung Alkenylgruppen aufweisende Organopolysiloxane.

Als Alkenylgruppen aufweisende Organopolysiloxane in vernetzbaren Zusammensetzungen für die Herstellung von klebrige Stoffe abweisenden Überzügen, insbesondere für die Trennpapierbeschichtung, werden üblicherweise entweder lineare Diorganopolysiloxane mit endständigen Vinylgruppen oder kammartig aufgebaute Vinylsiliconpolymere, d.h. lineare Diorganopolysiloxane ,die entlang der Hauptkette seitenständige, direkt an D-Einheiten gebundene Vinylgruppen aufweisen, verwendet. Die kammartig aufgebauten Vinylpolymere mit seitenständigen Vinylgruppen zeigen im Vergleich zu den Polymeren mit endständigen Vinylgruppen zwar ein niedrigeres Trennkraftverhalten bei hohen Abzugsgeschwindigkeiten der Selbstklebematerialen, wie Etiketten, von dem Trennpapier, aber eine Verlangsamung der Vernetzungsgeschwindigkeit.

In US 4,609,574 werden Diorganopolysiloxane mit seitenständigen höheren Alkenylgruppen, wie Hexenylgruppen, in einer Hydrosilylierungsreaktion durch Umsetzung von Diorganopolysiloxanen mit seitenständigen SiH-Gruppen mit $\alpha,\omega$-Dienen, wie 1,5-Hexadien, erhalten. Dieses Verfahren führt zu einem unerwünschten Verbleiben des Hydrosilylierungskatalysators im Polymer und zur unerwünschten Verbrückung von Organopolysiloxanketten.

EP 640 662 B1 beschreibt stark verzweigte ungesättigte Kohlenwasserstoffgruppen aufweisende Organopolysiloxane mit vorzugsweise mindestens 12 T-Einheiten.

In US 5,616,672 sind Alkenylgruppen aufweisende Organopolysiloxane beschrieben, die unspezifisch verzweigt sind. Dies führt zur unerwünschten Verbrückung von Organopolysiloxanketten. Es werden weniger flache Releasekurven erhalten, d.h. die Trennkraft steigt bei hohen Abzugsgeschwindigkeiten an.

US 4,386,135 offenbart sternförmige, von einer Verzweigungsstelle ausgehende Alkenylsiloxane. Es werden weniger flache Releasekurven erhalten, d.h. die Trennkraft steigt bei hohen Abzugsgeschwindigkeiten an.

Es bestand die Aufgabe, vernetzbare Zusammensetzungen enthaltend Alkenylgruppen aufweisende Organopolysiloxane bereitzustellen, mit denen die oben beschriebenen Nachteile vermieden werden und die ein niedrigeres Trennkraftverhalten bei hohen Abzugsgeschwindigkeiten aufweisen, ohne dass dadurch die Vernetzungsgeschwindigkeit verlangsamt wird. Die Aufgabe wird durch die Erfindung gelöst.

Gegenstand der Erfindung sind vernetzbare Zusammensetzungen enthaltend

(A) Alkenylgruppen aufweisende Organopolysiloxane der allgemeinen Formel

$$M^{vi}_a\ T_b\ D_c\ D^{vi}_d\ M_e \qquad (I),$$

wobei

$M^{vi}$ eine Einheit der Formel $R^1R_2SiO_{1/2}$,
T eine Einheit der Formel $RSiO_{3/2}$,
D eine Einheit der Formel $R_2SiO$
$D^{vi}$ eine Einheit der Formel $R^1RSiO$ und
M eine Einheit der Formel $R_3SiO_{1/2}$ bedeuten,
wobei R einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen bedeutet und
$R^1$ einen einwertigen, SiC-gebundenen Kohlenwasserstoffrest mit terminaler aliphatischer Kohlenstoff-Kohlenstoff-Doppelbindung mit 2 bis 8 Kohlenstoffatomen je Rest bedeutet,
a durchschnittlich 2,5 bis 8, vorzugsweise 3 bis 8, bevorzugt 4 bis 6 ist,
b durchschnittlich a-2 ist, vorzugsweise 1 bis 6, bevorzugt 2 bis 4 ist,
c durchschnittlich 41 bis 1000, vorzugsweise 80 bis 500, bevorzugt 100 bis 200 ist,
d durchschnittlich 0 bis 4, vorzugsweise 0 bis 0,5, bevorzugt 0 ist und
e durchschnittlich 0 bis 2, vorzugsweise 0 bis 0,5, bevorzugt 0 ist,
mit der Maßgabe, dass a-2 $M^{vi}$-Einheiten direkt an T-Einheiten gebunden sind,

(B) Organosiliciumverbindungen mit Si-gebundenen Wasserstoffatomen und
(C) die Anlagerung von Si-gebundenem Wasserstoff an aliphatische Doppelbindungen fördernde Katalysatoren.

Gegenstand der Erfindung sind weiterhin Alkenylgruppen aufweisende Organopolysiloxane der allgemeinen Formel

$M^{vi}_a\ T_b\ D_c\ D^{vi}_d\ M_e$ (I),

wobei

$M^{vi}$ eine Einheit der Formel $R^1R_2SiO_{1/2}$,
T eine Einheit der Formel $RSiO_{3/2}$,
D eine Einheit der Formel $R_2SiO$
$D^{vi}$ eine Einheit der Formel $R^1RSiO$ und
M eine Einheit der Formel $R_3SiO_{1/2}$ bedeuten,
wobei R einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen bedeutet und
$R^1$ einen einwertigen, SiC-gebundenen Kohlenwasserstoffrest mit terminaler aliphatischer Kohlenstoff-Kohlenstoff-Doppelbindung mit 2 bis 8 Kohlenstoffatomen je Rest bedeutet,
a durchschnittlich 2,5 bis 8, vorzugsweise 3 bis 8, bevorzugt 4 bis 6 ist,
b durchschnittlich a-2 ist, vorzugsweise 1 bis 6, bevorzugt 2 bis 4 ist,
c durchschnittlich 41 bis 1000, vorzugsweise 80 bis 500, bevorzugt 100 bis 200 ist,
d durchschnittlich 0 bis 4, vorzugsweise 0 bis 0,5, bevorzugt 0 ist und
e durchschnittlich 0 bis 2, vorzugsweise 0 bis 0,5, bevorzugt 0 ist,

mit der Maßgabe, dass a-2 $M^{vi}$-Einheiten direkt an T-Einheiten gebunden sind.

Bevorzugt werden als (A) Alkenylgruppen aufweisende Organopolysiloxane solche der allgemeinen Formel

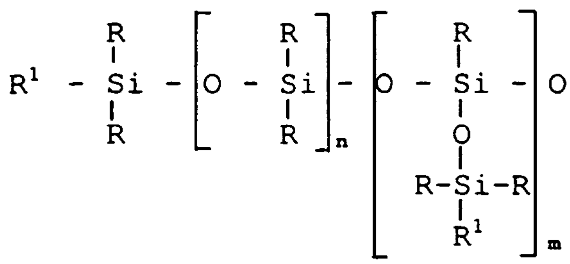

(II)

wobei R und $R^1$ die oben dafür angegebene Bedeutung haben,
n 41 bis 1000, vorzugsweise 80 bis 500, bevorzugt 100 bis 200 ist,
m 1 bis 6, bevorzugt 2 bis 4 ist,

eingesetzt.

Im Rahmen dieser Erfindung soll Formel (II) so verstanden werden, dass n Einheiten $-(SiR_2O)-$ und m Einheiten $-(SiRO_{3/2})\ (SiR_2R^1O_{1/2})-$in beliebiger Weise, beispielsweise als Block oder statistisch, im Organopolysiloxanmolekül verteilt sein können.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Reste $R^1$ sind Alkenylreste, wie der Vinyl-, 5-Hexenyl-, Cyclohexenyl-, 1-Propenyl-, Allyl-, 3-Butenyl- und 4-Pentenylrest.

Bevorzugt handelt es sich bei dem Rest $R^1$ um Alkenylreste, wobei der Vinylrest besonders bevorzugt ist.

Die Organopolysiloxane (A) besitzen vorzugsweise eine durchschnittliche Viskosität von 100 bis 10000 mPa.s bei 25°C, bevorzugt 200 bis 1000 mPa.s bei 25°C.

Die erfindungsgemäßen Organopolysiloxane (A) werden nach üblichen Verfahren, beispielsweise über H-Siloxan-Equilibrate und den entsprechenden Silanen hergestellt.

Beispiele für erfindungsgemäßen Organopolysiloxane (A) sind Vinylgruppen aufweisenden Organopolysiloxane der Formel

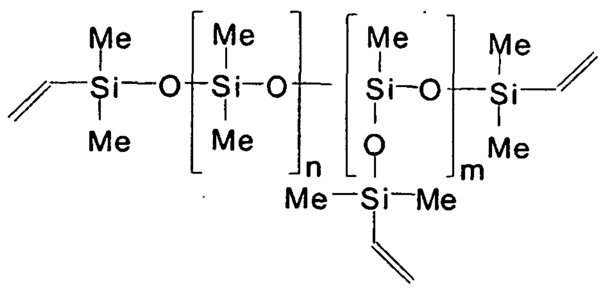

(III)

wobei Me einen Methylrest und n und m die oben dafür angegebene Bedeutung haben.

Die erfindungsgemäßen Alkenylgruppen aufweisenden Organopolysiloxane (A) werden in vernetzbaren Zusammensetzungen eingesetzt und haben den Vorteil, dass additionsvernetzende Releasesysteme mit flachen Releasekurven, d.h. niedriges Trennkraftverhalten bei hohen Abzugsgeschwindigkeiten, und mit hohen Aushärtungsgeschwindigkeiten erhalten werden.

In den vernetzbaren Zusammensetzungen werden als Organosiliciumverbindungen (B), die Si-gebundene Wasserstoffatome aufweisen, vorzugsweise lineare, cyclische oder verzweigte Organopolysiloxane aus Einheiten der allgemeinen Formel IV

$$R^5_eH_fSiO_{\frac{4-e-f}{2}} \qquad (IV),$$

wobei

$R^5$ einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen bedeutet,
e 0, 1, 2 oder 3,
f 0, 1 oder 2
und die Summe von e+f 0, 1, 2 oder 3 ist,

mit der Maßgabe, dass durchschnittlich mindestens 2 Si-gebundene Wasserstoffatome vorliegen, verwendet.

Beispiele für Kohlenwasserstoffreste R gelten in vollem Umfang für Kohlenwasserstoffreste $R^5$.

Vorzugsweise enthalten die Organosiliciumverbindungen (B) mindestens 3 Si-gebundene Wasserstoffatome.

Bevorzugt werden als Organosiliciumverbindungen (B) Organopolysiloxane der allgemeinen Formel

$$H_hR^5_{3-h}SiO\ (SiR^5_2O)_o(SiR^5HO)_pSiR^5_{3-h}H_h \qquad (V)$$

wobei

$R^5$ die oben dafür angegebene Bedeutung hat,
h 0, 1 oder 2,
o 0 oder eine ganze Zahl von 1 bis 1500 und
p 0 oder eine ganze Zahl von 1 bis 200 ist,
mit der Maßgabe, dass durchschnittlich mindestens 2 Si-gebundene Wasserstoffatome, vorliegen, verwendet.

Im Rahmen dieser Erfindung soll Formel V so verstanden werden, dass o Einheiten -($SiR^5_2O$)- und p Einheiten -($SiR^5HO$)- in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Die Organopolysiloxane (B) besitzen vorzugsweise eine durchschnittliche Viskosität von 10 bis 1 000 mPa.s bei 25˚C.

Organosiliciumverbindung (B) wird vorzugsweise in Mengen von 0,5 bis 3,5, bevorzugt 1,0 bis 3,0 Grammatom, Si-gebundenen Wasserstoff je Mol Kohlenwasserstoffrest $R^1$ mit terminaler aliphatischer Kohlenstoff-Kohlenstoff-Doppelbindung in dem Organopolysiloxan (A) eingesetzt.

Als die Anlagerung von Si-gebundenem Wasserstoff an aliphatische Doppelbindungen fördernde Katalysatoren (C) können auch bei den vernetzbaren Zusammensetzungen die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus $H_2PtCl_6*6H_2O$ und Cyclohexanon, Platin-Vinyl-siloxankomplexe, wie Platin-1,3-Divinyl-1,1,3,3-tetramethyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A) und (B), eingesetzt.

Die vernetzbaren Zusammensetzungen können die Anlagerung von Si-gebundenem Wasserstoff an aliphatische Mehrfachbindung bei Raumtemperatur verzögernde Mittel, sogenannte Inhibitoren (D), enthalten. Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25˚C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel $HC\equiv C-C(CH_3)(OH)-CH_2-CH_2-CH=C(CH_3)_2$, käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^7R^5_2SiO_{1/2} \text{ und } SiO_2,$$

sogenannte MQ-Harze, wobei $R^7$ ein Wasserstoffatom, ein Kohlenwasserstoffrest $R^5$, wie Methylrest, ein Alkenylrest $R^1$, wie Vinylrest, ist, und $R^5$ und $R^1$ die oben dafür angegebene Bedeutung haben und die Einheiten der Formel $R^7R^5_2SiO_{1/2}$ gleich oder verschieden sein können. Das Verhältnis von Einheiten der Formel $R^7R^5_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele für organische Lösungsmittel sind Benzine, z. B. Alkangemische mit einem Siedebereich von 70˚C bis 180˚C, n-Heptan, Benzol, Toluol und Xylole, halogenierte Alkane mit 1 bis 6 Kohlenstoffatom(en), wie Methylenchlorid,

Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet. Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der erfindungsgemäßen Zusammensetzungen.

Bei den Formkörpern handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 μm, besonders bevorzugt 0,5 bis 2,0 μm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien, Polyesterfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck- und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck- und Mitläuferpappen, -folien und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi,

bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst. Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen.

Beispiel und Vergleichsversuche 1 und 2:

Ein erfindungsgemäßes Vinylgruppen aufweisendes Organopolysiloxan **1** wurde mit bekannten Vinylgruppen aufweisenden Organopolysiloxanen **2** und **3** in seiner Eignung in der Trennbeschichtung verglichen. Die Struktur der Organopolysiloxane **1**, **2** und **3** ist jeweils aus der Tabelle zu entnehmen. Das erfindungsgemäße Organopolysiloxan 1 wurde aus einem H-Siloxan-Equilibrat und dem entsprechenden Silan hergestellt. Die in den Vergleichsversuchen eingesetzten Organopolysiloxane **2** und **3** wurden nach üblichen Equilibrierungsverfahren hergestellt.

Die Organopolysiloxane **1**, **2** und **3** wurden jeweils mit einem linearen Polysiloxan aus Hydrogenmethylsiloxan- und Trimethylsiloxaneinheiten im Verhältnis SiH:SiVi = 2:1 vermischt und mit 100 ppm einer Platinverbindung (Platin-1,3-Divinyl-1,1,3,3-tetramethyldisiloxan-Komplex) katalysiert. Die vernetzbaren Zusammensetzungen wurden auf Glassinepapier auf einer DIXON Beschichtungsanlage aufgetragen und 2,6 Sekunden bei 150°C im Trockenofen ausgehärtet. Der Grad der Vernetzung wurde über die Bestimmung des extrahierbaren Siliconanteils ermittelt. Die Bestimmung der Trennkräfte gegenüber dem Acrylatkleber A 7475 der Fa. TESA bei Abzugsgeschwindigkeiten von 0,3 m/min und 300 m/min. erfolgte nach den Standard FINAT - Testmethoden FTM 3 und FTM 4.

Tabelle:

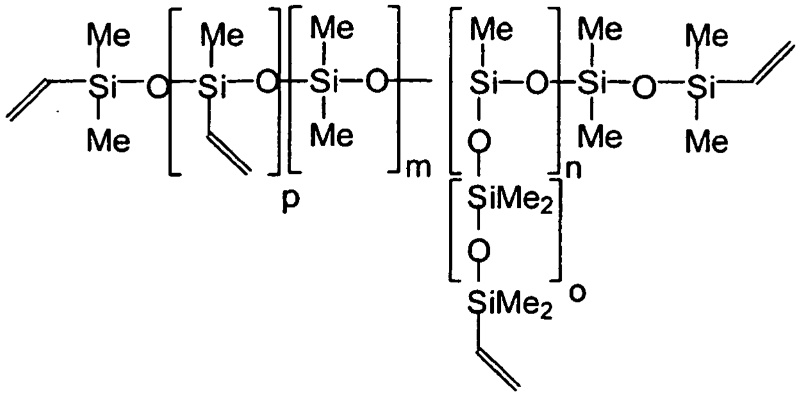

| Silicon | m | n | o | p | Extrakt [%] | Trennwert bei 0,3 m/min in [N/m] | Trennwert bei 300 m/min in [N/m] |
|---|---|---|---|---|---|---|---|
| **1** (Beispiel) | 120 | 2 | 0 | 0 | 2,8 | 14,5 | 13,5 |
| **2** (Vergleich) | 120 | 0 | 0 | 2 | 9,4 | 29,8 | 14,1 |
| **3** (Vergleich) | 60 | 2 | 30 | 0 | 3,1 | 16,3 | 21,2 |

Die Ergebnisse zeigen, dass das erfindungsgemäße Alkenylgruppen aufweisende Organopolysiloxan **1** eine geringe Änderung der Trennkraft bei verschiedenen Abzugsgeschwindigkeiten zeigt. Der niedrige Extraktwert bei 2,6 Sekunden Aushärtungszeit zeigt die höhere Aushärtungsgeschwindigkeit des erfindungsgemäßen Alkenylgruppen aufweisenden Organopolysiloxans **1** gegenüber den Vergleichs-Organopölysiloxanen **2** und **3**.

## Patentansprüche

**1.** Vernetzbare Zusammensetzungen enthaltend

(A) Alkenylgruppen aufweisende Organopolysiloxane der allgemeinen Formel

$$M^{vi}_a\ T_b\ D_c\ D^{vi}_d\ M_e \qquad (I),$$

wobei

$M^{vi}$ eine Einheit der Formel $R^1R_2SiO_{1/2}$,
T eine Einheit der Formel $RSiO_{3/2}$,
D eine Einheit der Formel $R_2SiO$
$D^{vi}$ eine Einheit der Formel $R^1RSiO$ und
M eine Einheit der Formel $R_3SiO_{1/2}$ bedeuten,
wobei R einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen bedeutet,
$R^1$ einen einwertigen, SiC-gebundenen Kohlenwasserstoffrest mit terminaler aliphatischer Kohlenstoff-Kohlenstoff-Doppelbindung mit 2 bis 8 Kohlenstoffatomen je Rest bedeutet,
a durchschnittlich 2,5 bis 8 ist,
b durchschnittlich a-2 ist,
c durchschnittlich 41 bis 1000 ist
d durchschnittlich 0 bis 4 ist und
e durchschnittlich 0 bis 2 ist,

mit der Maßgabe, dass a-2 $M^{vi}$-Einheiten direkt an T-Einheiten gebunden sind,
(B) Organosiliciumverbindungen mit Si-gebundenen Wasserstoffatomen und
(C) die Anlagerung von Si-gebundenem Wasserstoff an aliphatische Doppelbindungen fördernde Katalysatoren.

**2.** Vernetzbare Zusammensetzungen nach Anspruch 1, **dadurch gekennzeichnet, dass** a 3 bis 8 und b 1 bis 6 ist.

**3.** Vernetzbare Zusammensetzungen nach Anspruch 1 oder 2, **dadurch gekennzeichnet, dass** als

(A) Alkenylgruppen aufweisende Organopolysiloxane solche der allgemeinen Formel

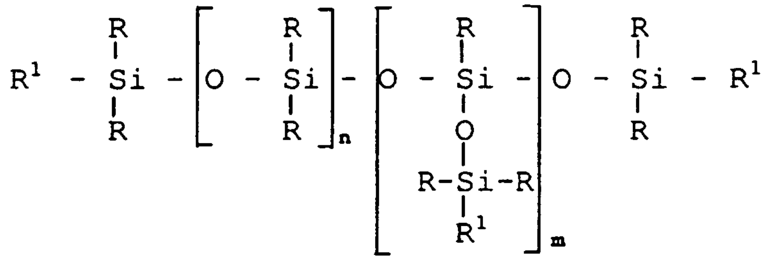

(II)

wobei R einen einwertigen von aliphatischen Kohlenstoff-Kohlenstoff-Doppelbindungen freien, SiC-gebundenen, gegebenenfalls substituierten Kohlenwasserstoffrest mit 1 bis 18 Kohlenstoffatomen bedeutet,
$R^1$ einen einwertigen, SiC-gebundenen Kohlenwasserstoffrest mit terminaler aliphatischer Kohlenstoff-Kohlenstoff-Doppelbindung mit 2 bis 8 Kohlenstoffatomen je Rest bedeutet,
n 41 bis 1000 ist und
m 1 bis 6 ist,

eingesetzt werden.

**4.** Vernetzbare Zusammensetzungen nach Anspruch 1, 2 oder 3, **dadurch gekennzeichnet, dass** $R^1$ ein Vinylrest ist.

**5.** Formkörper hergestellt durch Vernetzung der Zusammensetzungen gemäß einem der Ansprüche 1 bis 4.

6. Formkörper nach Anspruch 5, **dadurch gekennzeichnet, dass** es sich um Beschichtungen handelt.

7. Formkörper nach Anspruch 5, **dadurch gekennzeichnet, dass** es sich um klebrige Stoffe abweisende Überzüge handelt.

8. Verfahren zur Herstellung von Beschichtungen durch Auftragen von vernetzbaren Zusammensetzungen gemäß einem der Ansprüche 1 bis 4 auf die zu beschichtenden Oberflächen und anschließende Vernetzung der Zusammensetzungen.

9. Verfahren zur Herstellung von klebrige Stoffe abweisenden Überzügen durch Auftragen von vernetzbaren Zusammensetzungen gemäß einem der Ansprüche 1 bis 4 auf die klebrige Stoffe abweisend zu machenden Oberflächen und anschließende Vernetzung der Zusammensetzungen.

10. Alkenylgruppen aufweisende Organopolysiloxane der allgemeinen Formel

$$M^{vi}_a \, T_b \, D_c \, D^{vi}_d \, M_e \qquad (I),$$

wobei $M^{vi}$, T,D, $D^{vi}$, M, a, b, c, d und e die in Anspruch 1 dafür angegebene Bedeutung haben, mit der Maßgabe, dass a-2 $M^{vi}$-Einheiten direkt an T-Einheiten gebunden sind.

11. Alkenylgruppen aufweisende Organopolysiloxane nach Anspruch 10, **dadurch,gekennzeichnet, dass** es solche der allgemeinen Formel

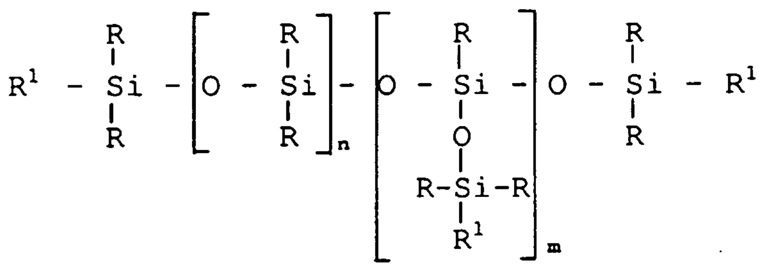

(II)

sind, wobei R, $R^1$, n und m die in Anspruch 3 angegebene Bedeutung haben.

## Claims

1. Crosslinkable compositions comprising

(A) organopolysiloxanes containing alkenyl groups, of the general formula

$$M^{vi}_a \, T_b \, D_c \, D^{vi}_d \, M_e \qquad (I)$$

where

$M^{vi}$ is a unit of the formula $R^1R_2SiO_{1/2}$,
T is a unit of the formula $RSiO_{3/2}$,
D is a unit of the formula $R_2SiO$,
$D^{vi}$ is a unit of the formula $R^1RSiO$, and
M is a unit of the formula $R_3SiO_{1/2}$,
R being a monovalent, SiC-bonded, unsubstituted or substituted hydrocarbon radical which has 1 to 18 carbon atoms and is free from aliphatic carbon-carbon double bonds and
$R^1$ is a monovalent, SiC-bonded hydrocarbon radical having a terminal aliphatic carbon-carbon double bond and having 2 to 8 carbon atoms per radical,
a is on average 2.5 to 8,
b is on average a-2,

c is on average 41 to 1000,
d is on average 0 to 4, and
e is on average 0 to 2,

with the proviso that a-2 $M^{vi}$ units are attached directly to T units,
(B) organosilicon compounds having Si-bonded hydrogen atoms, and
(C) catalysts which promote the addition of Si-bonded hydrogen to aliphatic double bonds.

2. Crosslinkable compositions according to Claim 1, **characterized in that** a is 3 to 8 and b is 1 to 6.

3. Crosslinkable compositions according to Claim 1 or 2, **characterized in that** as

(A) organopolysiloxanes containing alkenyl groups use is made of those of the general formula

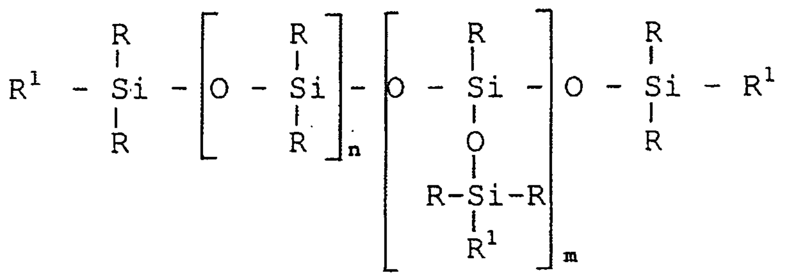 (II)

where

R is a monovalent, SiC-bonded, unsubstituted or substituted hydrocarbon radical having 1 to 18 carbon atoms which is free from aliphatic carbon-carbon double bonds,
$R^1$ is a monovalent, SiC-bonded hydrocarbon radical having a terminal aliphatic carbon-carbon double bond and having 2 to 8 carbon atoms per radical,
n is 41 to 1000, and
m is 1 to 6.

4. Crosslinkable compositions according to Claim 1, 2 or 3, **characterized in that** $R^1$ is a vinyl radical.

5. Shaped bodies produced by crosslinking the composition according to any one of Claims 1 to 4.

6. Shaped bodies according to Claim 5, **characterized in that** they are coatings.

7. Shaped bodies according to Claim 5, **characterized in that** they are coatings which repel tacky substances.

8. Process for producing coatings by applying crosslinkable compositions according to any one of Claims 1 to 4 to the surfaces to be coated and then crosslinking the compositions.

9. Process for producing coatings which repel tacky substances by applying crosslinkable compositions according to any one of Claims 1 to 4 to the surfaces that are to be made repellent to tacky substances and then crosslinking the compositions.

10. Organopolysiloxanes containing alkenyl groups, of the general formula

$$M^{vi}_a\, T_b\, D_c\, D^{vi}_d\, M_e \qquad (I)$$

where $M^{vi}$, T, D, $D^{vi}$, M, a, b, c, d, and e are as defined in Claim 1,
with the proviso that a-2 $M^{vi}$ units are attached directly to T units.

11. Organopolysiloxanes containing alkenyl groups according to Claim 10, **characterized in that** they are of the general

formula

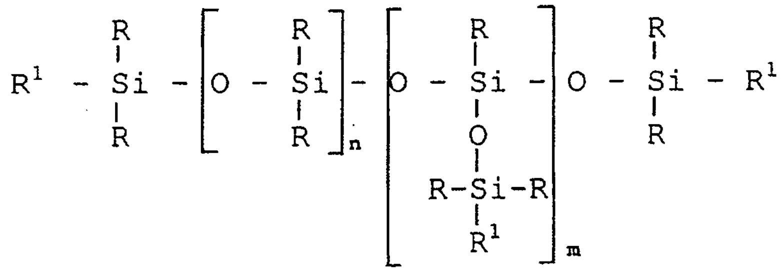 (II)

where R, $R^1$, n, and m are as defined in Claim 3.

**Revendications**

**1.** Compositions réticulables, contenant

(A) des organopolysiloxanes présentant des groupes alcényle de formule générale

$$M^{vi}_a\ T_b\ D_c\ D^{vi}_d\ M_e \qquad (I),$$

où

$M^{vi}$ signifie une unité de formule $R^1R_2SiO_{1/2}$,
T signifie une unité de formule $RSiO_{3/2}$,
D signifie une unité de formule $R_2SiO$,
$D^{vi}$ signifie une unité de formule $R^1RSiO$ et
M signifie une unité de formule $R^3SiO_{1/2}$,

où R signifie un radical hydrocarboné monovalent, exempt de doubles liaisons carbone-carbone aliphatiques, lié par SiC, le cas échéant substitué, comprenant 1 à 18 atomes de carbone,

$R^1$ signifie un radical hydrocarboné monovalent, lié par SiC, comprenant une double liaison carbone-carbone aliphatique terminale, comprenant 2 à 8 atomes de carbone par radical,
a vaut en moyenne 2,5 à 8,
b vaut en moyenne a-2,
c vaut en moyenne 41 à 1000,
d vaut en moyenne 0 à 4 et
e vaut en moyenne 0 à 2,

à condition que a-2 unités $M^{vi}$ soient liées directement à des unités T,
(B) des composés organosiliciés avec des atomes d'hydrogène liés par Si et
(C) des catalyseurs favorisant l'addition d'hydrogène lié par Si sur des doubles liaisons aliphatiques.

**2.** Compositions réticulables selon la revendication 1, **caractérisées en ce que** a vaut 3 à 8 et b vaut 1 à 6.

**3.** Compositions réticulables selon la revendication 1 ou 2, **caractérisées en ce qu'**on utilise comme

(A) organopolysiloxanes présentant des groupes alcényle ceux de formule générale

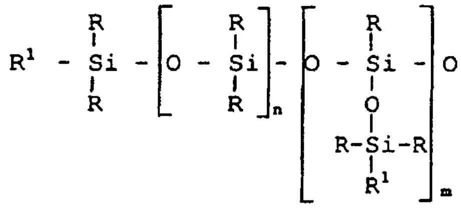

(II)

où R signifie un radical hydrocarboné monovalent, exempt de doubles liaisons carbone-carbone aliphatiques, lié par SiC, le cas échéant substitué, comprenant 1 à 18 atomes de carbone,

$R^1$ signifie un radical hydrocarboné monovalent, lié par SiC, comprenant une double liaison carbone-carbone aliphatique terminale, comprenant 2 à 8 atomes de carbone par radical,
n vaut 41 à 1000 et
m vaut 1 à 6.

4. Compositions réticulables selon la revendication 1, 2 ou 3, **caractérisées en ce que** $R^1$ représente un radical vinyle.

5. Corps façonné préparé par réticulation des compositions selon l'une quelconque des revendications 1 à 4.

6. Corps façonné selon la revendication 5,
**caractérisé en ce qu'**il s'agit de revêtements.

7. Corps façonné selon la revendication 5,
**caractérisé en ce qu'**il s'agit de recouvrements repoussant les substances collantes.

8. Procédé pour la réalisation de revêtements par application de compositions réticulables selon l'une quelconque des revendications 1 à 4 sur les surfaces à revêtir et réticulation consécutive des compositions.

9. Procédé pour la réalisation de recouvrements repoussant les substances collantes par application de compositions réticulables selon l'une quelconque des revendications 1 à 4 sur les surfaces à rendre repoussantes pour les substances collantes et réticulation consécutive des compositions.

10. Organopolysiloxanes présentant des groupes alcényle de formule générale

$$M^{vi}_a T_b D_c D^{Vi}_d M_e \qquad (I)$$

où $M^{vi}$, T, D, $D^{vi}$, M, a, b, c, d et e ont la signification indiquée pour ceux-ci dans la revendication 1, à condition que a-2 unités $M^{vi}$ soient liées directement à des unités T.

11. Organopolysiloxanes présentant des groupes alcényle selon la revendication 10, **caractérisés en ce qu'**il s'agit de ceux de formule générale

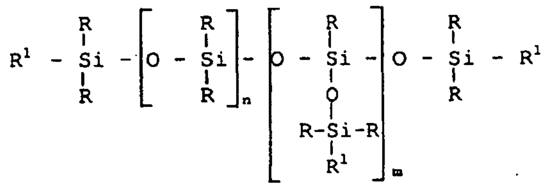

(II)

R, $R^1$, n et m ayant la signification indiquée dans la revendication 3.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4609574 A
- EP 640662 B1
- US 5616672 A
- US 4386135 A